# FASCICULE DE BREVET EUROPEEN

(11) **EP 0 410 851 B1**
(45) Date de publication et mention de la délivrance du brevet: **28.12.1994**
(21) Numéro de dépôt: 90402076.5
(22) Date de dépôt: 18.07.1990
(51) Int. Cl.: G01N 21/64

(54) **Capteur chimique actif à fibre optique et son procédé de fabrication**
Faseroptischer, aktiver, chemischer Sensor und Herstellungsverfahren desselben
Fiberoptic active chemical sensor and fabrication method of the same

(30) Priorité: 20.07.1989 FR 8909786
(43) Date de publication de la demande: 30.01.1991
(73) Titulaire: COMMISSARIAT A L'ENERGIE ATOMIQUE, 75015 Paris Cédex 15 (FR); PHOTONETICS, 78160 Marly le Roi (FR)
(72) Inventeur: Sebille, Bernard, F-92140 Clamart (FR); Biatry, Bruno, F-75020 Paris (FR); Boisde, Gilbert, F-91440 Bures Sur Yvette (FR)
(74) Mandataire: Des Termes, Monique

(56) Documents cités:
- EP-A- 0 072 627
- WO-A-88/05533
- AT-A- 384 891
- US-A- 4 803 049
- ANALYTICAL CHEMISTRY, vol. 58, no. 7, juin 1986, pages 1427-1430, Washington, US ; C. MUNKHOLM et al. : "Polymer modification of fiber optic chemical sensors as a method of enhancing fluorescence signal for pH measurement".
- MACROMOLECULES, vol. 20, no. 8, 1987, pages 1907-1912; E. TSUCHIDA et al.:"Facilitated transport of molecular oxygen in the membranes of polymer-coordinated cobalt schiff base complexes"

## Description

La présente invention se rapporte à un capteur chimique actif à fibre optique destiné à la mesure à distance d'une grandeur donnée d'un milieu généralement fluide. Elle trouve notamment des applications dans les domaines nucléaire et industriel pour le contrôle des processus chimiques, de l'environnement pour le contrôle des déchets nucléaires enterrés, de l'analyse médicale et biologique ou dans l'industrie agro-alimentaire par exemple mettant en jeu des micro-organismes.

Ce capteur permet la mesure de la concentration d'espèces chimiques dans des milieux fluides et en particulier des cations ou des anions ainsi que la mesure du pH de solutions liquides ou la mesure de la pression partielle de gaz tels que l'oxygène ou le gaz carbonique dans des mélanges gazeux ou dans des liquides.

Plus spécifiquement, l'invention permet la mesure de pH compris entre 3 et 9 et en particulier la mesure des pH des systèmes à forces ioniques sensiblement constantes telles que le sang, le plasma sanguin, l'eau de mer et des pH voisins de la neutralité ainsi que la mesure de la pression partielle de CO₂ dans de tels milieux.

Le capteur de l'invention permet des mesures à distance, sur plusieurs kilomètres si nécessaire, selon les méthodes habituelles de l'absorptiométrie optique (photométrie, réflectance, spectrophotométrie), de la luminance (chimi-luminescence, fluorescence, phosphorescence).

L'invention peut aussi être utilisée pour la réalisation de capteurs physiques permettant la mesure de température par triboluminescence.

La présente invention se rapporte uniquement à la partie sensible d'un capteur chimique et non à l'appareil de mesure ou au système de traitement du signal qui lui est associé. Cette partie sensible est connue sous le nom d'"optode" ou d'"optrode".

En outre, le capteur de l'invention appartient à la catégorie des "optodes" dites actives qui s'opposent aux "optodes" dites passives.

Les optodes passives comportent une ou plusieurs fibres optiques utilisées uniquement en tant que guide de lumière en vue d'étudier un effet (absorption, fluorescence) dans un milieu fluide. Les optodes actives comportent une ou plusieurs fibres dont l'extrémité supporte un réactif chimique immobilisé qui, au contact du milieu fluide à étudier, interagit avec une lumière issue de la fibre ou des fibres. L'étude de la lumière résultant de cette interaction permet d'aboutir aux résultats de la mesure.

En particulier ce réactif est une substance dont la couleur varie sous l'effet de la grandeur étudiée du milieu et l'on peut observer cette variation de coloration en absorption ou en fluorescence suivant la réaction chimique réactif-milieu utilisée.

Lorsque les propriétés optiques des fibres elles-mêmes sont modifiées, en particulier par réaction chimique d'un composant sur les fibres ou sur leur extrémité, l'optode correspondante est dite "active intrinsèque".

Dans ce type d'optode, on utilise les ondes évanescentes pour la mesure.

Lorsque les propriétés optiques des fibres optiques ne sont pas modifiées, l'optode correspondante est dite "active extrinsèque".

Pour de plus amples informations sur les optodes et leur fonctionnement, on peut se référer à la publication de G. BOISDE et J.J. PEREZ "Une nouvelle génération de capteurs : les optodes", La Vie des Sciences, comptes-rendus, série générale, tome 5, n° 5, p. 303-332 (1988).

Les optodes passives nécessitent la dilution appropriée d'un réactif chimique dans un milieu liquide rendant leur utilisation longue et la production d'effluents parfois nocifs (domaines industriel et nucléaire) qu'il faut traiter et/ou stocker. De plus, leurs applications sont limitées.

On connaît également un capteur du type optode active extrinsèque à fibres optiques pour la mesure du pH ou de la pression partielle de CO₂ dans un milieu liquide par le document FR-A-2 613 074 déposé au nom du demandeur. Ce capteur comporte une fibre optique émettrice servant à renvoyer la lumière en direction d'une microbille sur laquelle est fixé le réactif chimique et une fibre optique réceptrice servant à récupérer la lumière issue du réactif.

Ce capteur présente un certain nombre d'avantages, comme une bonne stabilité et une longue durée de vie ainsi qu'une stérilisation facile permettant sa réutilisation un grand nombre de fois. Malheureusement, l'interaction entre les fibres optiques et le réactif immobilisé dans la microbille n'est pas suffisamment reproductible et la cinétique de réaction entre le milieu à étudier et le réactif n'est pas suffisamment rapide dans les milieux neutres. Ainsi, ce capteur n'est utilisable que dans des milieux de pH acide (<3) ou basique (>9) ; il ne permet donc pas l'analyse en milieu neutre et en particulier la mesure de pH neutre.

Comme autre capteur du type optode active extrinsèque connu, on peut citer celui décrit dans l'article de F.V. BRIGHT et al. "A new ion sensor based on fiber-optics", Talanta, vol. 35, n°2 (1988), p. 113-118. Dans ce capteur, on utilise une membrane de Nafion^{(R)} comme support d'une substance fluorophore, montée à l'extrémité de deux fibres optiques, une émettrice et une réceptrice, accolées. Ce capteur sert à mesurer la concentration d'un grand nombre d'espèces chimiques.

Les optodes connues du type actif extrinsèque ont l'inconvénient d'être encombrantes, limitant ainsi la miniaturisation et augmentant le temps de réponse.

Un capteur du type optode active intrinsèque pour la mesure de CO₂ est décrit par C. MUNKHOLM et D.R. WALT dans l'article "A fiber-optic sensor for CO₂ measurement", Talanta, vol. 35, n°2 (1988), p. 109-112. Il comporte un polymère du type acrylamide ou hydroxyéthylméthacrylate, greffé sur l'extrémité sensible d'une unique fibre optique, dans lequel est immobilisée une substance fluorophore par copolymérisation ou adsorption, et une membrane échangeuse d'ions recouvrant le polymère. La présence de cette membrane augmente le temps de réponse du capteur et gêne sa stérilisation.

Un autre capteur du type optode active intrinsèque pour des essais immunologiques est décrit dans "Fiber-optic time resolved fluorimetry for immunoassays" de R.D. PETREA ET AL., Talanta, vol. 35, n°2 (1988), p. 139-144. Il comporte un polymère du type polypropylène dans lequel est immobilisé un réactif biologique par liaison covalente.

Ces optodes actives intrinsèques, en plus de leurs inconvénients propres, ne sont utilisables que pour une technique particulière de mesure. De plus, elles sont incompatibles avec le principe d'optode jetable ou déconnectable en vue d'un changement de la zone sensible ou le principe d'optode utilisant plusieurs colorants simultanément.

L'invention a justement pour objet un capteur chimique à fibre optique du type optode chimique active permettant de remédier aux différents inconvénients donnés ci-dessus. Ce capteur peut notamment être utilisé dans toutes les techniques de mesure optique telle que l'absorption, la réflectance, la luminance ou la mesure par onde évanescente et fournir une réponse en un temps très faible (moins de 30 secondes et même moins de 10 secondes). En outre, ce capteur peut être utilisé dans une grande gamme de pH allant de 3 à 9. Il permet en particulier la mesure de pH neutre.

De façon plus précise, l'invention a pour objet un capteur chimique actif à fibre optique pour la mesure d'une grandeur donnée d'un fluide, comportant un réactif chimique approprié à la mesure et apte à réagir avec le fluide, un moyen de support du réactif et une unique fibre optique destinée à envoyer de la lumière sur le réactif et à récupérer la lumière renvoyée par le réactif, le capteur étant caractérisé en ce que le moyen de support comporte un film de polymère ou de copolymère du vinylimidazole dans lequel est immobilisé le réactif.

Le capteur de l'invention est utilisable dans toutes les techniques de mesure optique. En outre, son temps de réponse est rapide. Il est biocompatible et stérilisable; de plus, le capteur de l'invention est dépourvu de membrane, ce qui améliore son temps de réponse. Enfin, il est utilisable dans une gamme de pH allant de 3 à 9.

Plus le film de polymère ou de copolymère est mince, plus le temps de réponse du capteur est rapide ; l'épaisseur du film est de 3 à 100 micromètres.

Le polyvinylimidazole utilisé dans l'invention est un polymère connu comportant l'unité récurrente représentée par l'une ou l'autre des formules (I) et (II) données dans l'annexe I, dans lesquelles R₁ représente un groupe alkyle linéaire ou ramifié de 1 à 4 atomes de carbone, par exemple un groupe méthyle, éthyle ou n-propyle, ou un groupe de formule -CH₂CHOH-CH₂X, X étant un atome d'hydrogène, un atome d'halogène tel que le chlore, le brome ou l'iode, un groupe hydroxy ou une chaîne hydroxyalkyle de 1 à 4 atomes de carbone, et R₂ représente un atome d'hydrogène ou un groupe méthyle.

On peut utiliser un polyvinylimidazole de masse moléculaire comprise par exemple entre 5000 et 200 000.

Le monomère copolymérisable avec le vinylimidazole peut être un dérivé à insaturation éthylénique de formule CH₂=CR₃R₄ dans laquelle R₃ représente un atome d'hydrogène ou un groupe méthyle, et R₄ représente un groupe alcoxy inférieur de 1 à 3 atomes de carbone, un groupe amino, diméthylamino, cyano, N-pyrrolidone, et en particulier N-pyrrolidone-2, un groupe de formule -COOR₅ où R₅ est un atome d'hydrogène ou un groupe méthyle, éthyle, époxyéthyle, 2,3-époxypropyle, ou hydroxyalkyle de 1 à 3 atomes de carbone, un groupe -CONR₆R₇ où R₆ et R₇, identiques ou différents, représentent un atome d'halogène, un groupe alkyle de 1 à 3 atomes de carbone, ou hydroxyalkyle de 1 à 4 atomes de carbone et en particulier tri(hydroxyméthyl)méthyle, ou encore un reste silanique de formule -SiX₃, où X est un atome d'hydrogène ou d'halogène (par exemple le chlore ou le brome) ou un groupe alcoxy de 1 à 4 atomes de carbone, un groupe acétoxy ou un groupe phénoxy.

Le monomère copolymérisable peut être plus particulièrement choisi parmi l'acrylamide, la N-vinylpyrrolidone, le vinyltriméthoxysilane, le vinyltriacétoxysilane, le vinyltrichlorosilane, l'acrylate d'éthylène glycol, l'acrylate de glycidyle et le trihydroxyméthyl acrylamide. La polymérisation des comonomères s'effectue par les techniques usuelles.

De préférence, on utilise un polymère du poly(vinylimidazole).

En effet, le poly(vinylimidazole), noté ci-après PVI en abréviation, a l'avantage d'être compatible avec les milieux biologiques comme le sang et le plasma sanguin, contrairement aux polymères utilisés jusqu'à ce jour dans les optodes décrites précédemment et à certains copolymères de l'invention.

De préférence la fibre optique constitue une partie essentielle du support du réactif chimique. Ceci permet de miniaturiser le capteur avec des fibres de 200 microns à 1 millimètre maximum et de conduire à un agencement directement intégré compatible avec la transmission à longue distance par fibre. De préférence, le polymère renfermant le réactif est directement greffé sur une extrémité de la fibre optique.

Comme fibre optique utilisable dans l'invention, on peut citer les fibres plastiques et en particulier les fibres en polyméthacrylate de méthyle ou en polystyrène, les fibres de verre borosilicaté ou les fibres de quartz ou encore les fibres de silice.

Le réactif chimique peut être fixé sur le polymère par des liaisons de type covalent ou par des liaisons ioniques ou encore par adsorption. Les réactifs chimiques sont des chromophores qui peuvent être des indicateurs colorés, des composants chimiques luminescents (luminophores) ou fluorescents (fluorophores).

Afin d'accroître la gamme pH d'utilisation du capteur, le réactif chimique peut être constitué d'un mélange de chromophores.

Dans l'application particulière de la mesure du pH ou de la pression de CO₂ d'une solution aqueuse, on utilise des chromophores du type indicateur coloré, comportant une fonction acide sulfonique.

L'invention a aussi pour objet un procédé de fabrication du capteur décrit précédemment.

En particulier ce procédé permet la fabrication d'un capteur chimique actif comportant un film de polymère ou de copolymère de vinylimidazole, greffé sur l'extrémité d'une fibre optique comportant des groupements silanol, et renfermant un réactif chimique approprié à la mesure.

Ce procédé comprend les étapes suivantes :
a) - polymériser ou copolymériser le vinylimidazole,
b) - activer l'extrémité de la fibre pour dégager ses groupements silanol,
c) - faire réagir les groupements silanol activés avec un organosilane comportant une fonction apte à réagir avec le polymère ou copolymère de vinylimidazole,
d) - faire réagir ladite fonction afin de greffer le polymère ou copolymère sur la fibre optique,
e) - réticuler le polymère ou copolymère,
f) - alkyler ou benzyler les motifs imidazole non "quaternisés" et
g) - immobiliser le réactif chimique dans le polymère ou copolymère.

L'organosilane utilisable dans l'invention comporte en particulier une fonction époxyde, chlorure, amine, vinyle, ou méthacryloyle ; la chaîne carbonée comprend de 1 à 20 atomes de carbone.

Comme organosilane, on peut citer le 3-glycidoxypropyl-triméthoxy ou -triéthoxy silane, l'aminopropyltriéthoxysilane, le chloropropyltriéthoxysilane, le triéthoxysilylpropanethiol, le N-(2-aminoéthyl)3-aminopropyltriméthoxysilane, le glycidyloxypropyltriméthoxysilane, le triacétoxyvinylsilane ou le méthacryloxypropyltriméthoxysilane.

L'ordre des étapes de ce procédé peut être modifié. En particulier l'étape a) de fabrication du polymère ou copolymère de base peut avoir lieu avant ou après les étapes b) et c) de préparation préalable de la fibre optique. En outre, l'imprégnation du polymère ou du copolymère par le réactif chimique peut avoir lieu juste après l'étape e) de réticulation ou bien lors de l'utilisation du capteur.

De façon avantageuse, on effectue l'étape de réticulation en présence d'un composé polyfonctionnel et en particulier bifonctionnel comportant une fonction époxyde et/ou une fonction chlorure tel que l'épichlorhydrine.

Selon l'invention, il est possible de réaliser l'alkylation avant ou après l'étape de réticulation par le composé bifonctionnel. En outre, la réticulation peut être réalisée par un processus radio-chimique.

D'autres caractéristiques et avantages de l'invention ressortiront mieux de la description qui va suivre, donnée à titre illustratif et non limitatif, en référence aux dessins annexés, dans lesquels :
- la figure 1 représente schématiquement un premier mode de réalisation d'un capteur conforme à l'invention,
- la figure 2 représente schématiquement un second mode de réalisation d'un capteur de l'invention,
- la figure 3 représente le spectre d'absorption du capteur de la figure 1 avec du tétrabromophénolsulfone phtaléïne comme réactif chimique ; la partie A de la figure 3 donne l'absorbance (A) en unité arbitraire (u.a) en fonction de la longueur d'onde (λ) exprimée en nanomètre et la partie B de la figure 3 donne la densité optique (D.O.) en fonction du pH, et
- la figure 4 donne le spectre d'absorption du capteur de la figure 1 avec un mélange d'indicateurs colorés comme réactif chimique ; la partie A de la figure 4 donne l'absorbance en unité arbitraire en fonction de la longueur d'onde en nm et la partie B donne la densité optique en fonction du pH.

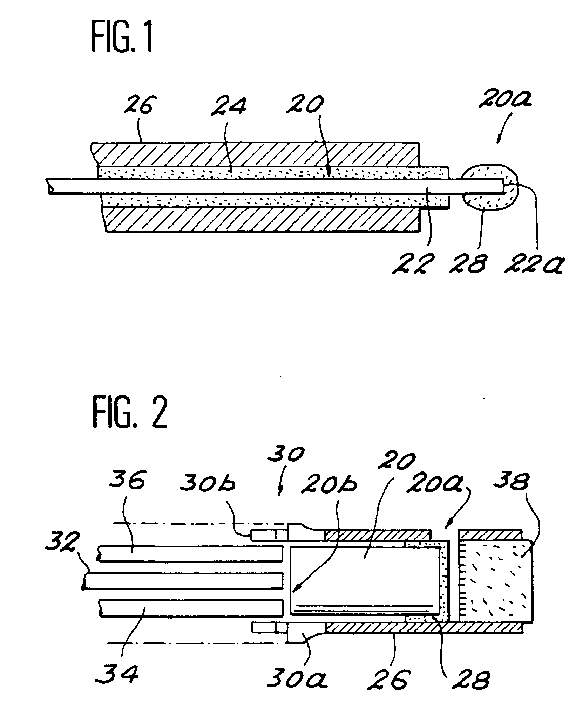

Sur la figure 1, on a représenté un capteur chimique actif ou optode conforme à l'invention. Ce capteur comporte une fibre optique 20 pourvue d'un coeur 22 en silice recouvert d'une gaine optique 24 en plastique et en particulier en silicone ou en polymère chloré ou fluoré. Ce type de fibre a l'avantage d'être dénudable facilement. Le diamètre de la fibre est de l'ordre du mm. Une gaine mécanique 26 en un matériau biocompatible tel que l'acier inoxydable protège l'ensemble de la fibre optique.

L'extrémité sensible 20a de la fibre optique est dénudée de façon à mettre à nu environ 1 cm de coeur ; l'extrémité dénudée 22a de coeur est polie optiquement.

Sur cette extrémité 22a de coeur est greffé un film 28 d'un polymère ou copolymère du vinylimidazole, d'environ 5 micromètres d'épaisseur, dans lequel est immobilisé un ou plusieurs chromophores et en particulier des fluorophores ou des indicateurs colorés.

L'autre extrémité de la fibre optique 20 est reliée à un système connu de traitement de l'information, comme représenté dans le document FR-A-2 613 074 et dans l'article de F.V. BRIGHT ou de R.D. PETREA mentionnés ci-dessus. La fibre optique peut avoir plusieurs dizaines de mètres de long.

Le capteur représenté sur la figure 1 est destiné essentiellement à fonctionner en absorbance et en fluorescence. Pour une analyse d'un milieu fluide en réflectance, on utilise de préférence le capteur représenté sur la figure 2.

Ce dernier se distingue essentiellement du capteur représenté sur la figure 1 par le fait que l'extrémité 20b de la fibre optique 20 (opposée à l'extrémité sensible 20a) est équipée d'un connecteur 30 permettant ainsi de relier la fibre optique 20 du capteur par exemple à trois ensembles d'autres fibres optiques 32 puis 34 et 36 disposées en couronne et pouvant avoir 100 mètres de long, la fibre optique 20 du capteur ne présentant que 4 à 20 cm de long. La fibre 32 peut servir pour amener la lumière dans la fibre optique 20 et les fibres 34 et 36 peuvent servir pour récupérer la lumière issue du colorant immobilisé dans le film de polymère 28, lorsqu'il est éclairé.

Le connecteur 30 est prévu démontable, ce qui permet de changer aussi souvent que nécessaire d'optode (optode consommable). La partie 30a du connecteur peut être rendue solidaire de la fibre optique 20 par collage. De même la partie 30b de ce connecteur est rendue solidaire des fibres optiques 32 à 36 par collage.

Afin d'amplifier le signal lumineux issu du colorant immobilisé dans le film de polymère 28, il est possible de placer un réflecteur 38 en regard de l'extrémité sensible 20a. La fixation de ce réflecteur 38 est assurée par collage dans un prolongement de la gaine mécanique 26.

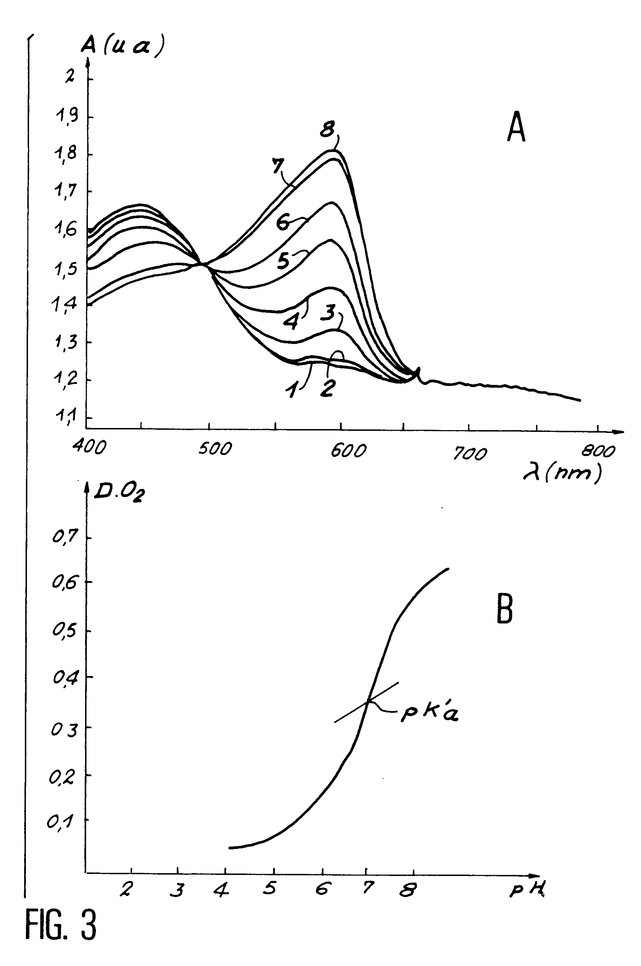

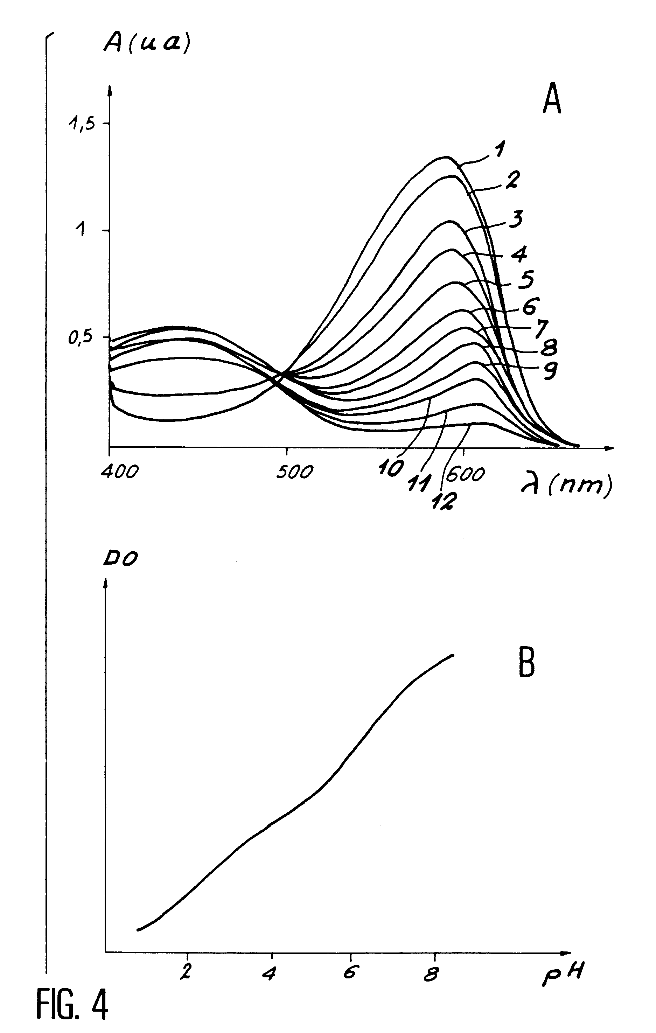

Sur les figures 3 et 4, on a représenté les spectres d'absorption du capteur de l'invention représenté sur la figure 1, équipé en pH-mètre, dans le cas du tétrabromophénolsulfone phtaléïne, noté TBPSP en abréviation, utilisé respectivement seul ou mélangé à du rouge de chlorophénol. Le spectre de la figure 3 correspond à 0,8% en poids de TBPSP dans un solvant contenant 80% en volume de méthanol et 20% en volume d'eau et le spectre de la figure 4 correspond à 0,1% en poids de TBPSP + 0,1% en poids de rouge de chlorophénol dans le même solvant. Le pka du TBPSP vaut 6,95.

Les courbes A des figures 3 et 4 donnent l'absorbance en fonction de la longueur d'onde et les courbes B de ces figures, la densité optique en fonction du pH.

Les courbes numérotées 1 à 8 sur la partie A de la figure 3 correspondent à des pH allant de 3,3 à 8,2 et les courbes numérotées de 1 à 12 de la figure 4 correspondent à des pH allant de 2 à 9.

Il ressort clairement de ces courbes que le capteur ou optode de l'invention peut être utilisé pour mesurer des pH allant de 3 à 9. En outre, il ressort de la courbe B de la figure 4 qu'un mélange approprié d'indicateurs colorés peut conduire à une variation sensiblement linéaire de la densité optique en fonction du pH.

On va décrire ci-après la fabrication d'un capteur ou optode conforme à l'invention.

### Etape a) : Fabrication du poly(vinylimidazole)

La première étape du procédé de fabrication du capteur de l'invention consiste à polymériser le vinylimidazole de formule (I) ou (II) donnée dans l'annexe I, à l'aide d'un amorçeur radicalaire représentant de 0,5 à 2% en moles par rapport au monomère. Cette polymérisation est réalisée à chaud à une température allant de 40 à 100°C sous atmosphère inerte (gaz rare ou azote).

### EXEMPLE

Dans 100 millilitres de méthanol pur on introduit 16,30 millilitres (soit environ 16,9 g ou 0,180 moles) de vinylimidazole fraîchement distillé. Après dégazage à l'azote, on ajoute un amorçeur de réaction, à savoir 236 mg (soit 1,44.10⁻³ moles) d'azobis-isobutyronitrile, ce qui correspond à 0,8% en mole d'amorçeur par rapport au monomère. Le mélange est porté à 60°C pendant 48 heures. Le polymère est ensuite précipité dans l'acétone. La poudre obtenue est séchée sous vide pendant 24 heures. Elle contient essentiellement du poly(vinylimidazole) PVI.

Les étapes suivantes du procédé consistent à préparer la fibre optique du capteur afin de permettre le greffage du PVI.

A cet effet une fibre optique comportant un coeur 22 de silice et une gaine optique 24 en plastique est débarrassée de sa gaine optique à l'une de ses extrémités 20a sur 1 centimètre environ. Cette extrémité dénudée est ensuite polie puis activée.

### Etape b) : Activation de la fibre optique.

L'activation consiste à effectuer un nettoyage de l'extrémité de la fibre par un traitement acide et un "dégagement en surface" des silanol libres de la fibre, correspondant à la réaction chimique (III) donnée dans l'annexe I.

### EXEMPLE

Cette opération d'activation de l'extrémité de la fibre est réalisée dans un mélange 50/50 d'acide nitrique et d'acide sulfurique concentrés pendant 30 minutes à température ambiante. Les fibres sont ensuite lavées plusieurs fois à l'eau distillée puis à l'acétone. Le traitement est suivi d'un séchage à l'étuve à 90°C.

### Etape c) : Réaction des groupement silanol activés.

Cette étape consiste à faire réagir les groupes silanol avec un organosilane comportant une fonction susceptible d'entrer en réaction ultérieurement avec le poly(vinylimidazole). On peut par exemple utiliser un organosilane comportant déjà une fonction époxyde ou opérer en deux phases ; d'abord incorporation de l'organosilane puis réaction avec une molécule à fonction époxyde selon des réactions de type classique (acide-alcool par exemple).

On réalise ainsi une jonction schématisée en (IV) en annexe I. Cette étape consiste donc à greffer la fibre avec un organosilane à fonction époxyde.

### EXEMPLE

Ce greffage peut être réalisé en plongeant l'extrémité de la fibre dans une solution de 3-glycidoxypropyltriméthoxysilane fraîchement distillé, diluée à 50% dans du toluène anhydre et portée à 90°C sous atmosphère inerte (d'azote notamment).

On peut aussi utiliser du 3-glyciloxypropyltriéthoxysilane. Après 24 heures, la fibre est lavée plusieurs fois dans du toluène pour enlever l'excés de réactif puis dans du dichlorométhane. Ensuite, on la place 24 heures dans une étuve à 90-95°C pour la sécher.

La réaction de silanisation est donnée en annexe I par la réaction (V).

### Etape d) : Greffage du polymère.

L'étape suivante du procédé consiste à greffer le PVI sur la fibre optique activée. La fonction époxyde greffée sur la fibre optique va servir d'agent de couplage avec le poly(vinylimidazole) selon la réaction (VI) donnée dans l'annexe II ; certains groupes imidazoles peuvent ne pas être liés directement à la fibre optique.

### EXEMPLE

Cette réaction (VI) peut être obtenue en mettant en solution le PVI dans du propanol à raison de 50 g/l (5% en poids). Ensuite, 1,2 ml de cette solution est dilué dans 1,8 ml de propanol puis est amené à 65°C sous faible agitation. L'extrémité de la fibre activée y est plongée verticalement pendant 60 minutes.

Cependant, il est nécessaire de créer des liaisons intra et intermoléculaires entre les chaînes du PVI afin d'améliorer sa rigidité.

### Etape e) : Réticulation du polymère.

Pour ce faire, on fait réticuler le PVI avec un réactif bifonctionnel comportant en particulier deux fonctions électrophiles soit chlorure comme par exemple le α - α′-paradichloroxylène, deux fonctions époxyde ou une fonction chlorure et une fonction époxyde comme par exemple l'épichlorhydrine.

Avec l'épichlorhydrine, le processus de réticulation est celui donné par la réaction (VII) dans l'annexe II.

### EXEMPLE

Cette étape de réticulation est effectuée avec 0,2 ml d'épichlorhydrine (2,44.10⁻³ moles), la température étant maintenue à 65°C pendant 45 minutes sous agitation.

Cette étape n'aboutit cependant pas à une "quaternisation" totale des motifs imidazole pour des raisons d'encombrement stérique.

Aussi, est-il avantageux d'y ajouter une étape d'alkylation ou de benzylation des motifs imidazole non "quaternisés" afin de former un film continu rigide de polymère.

### Etape f) : Alkylation des motifs non "quaternisés".

A cet effet, on effectue une réaction d'alkylation avec l'iodure de méthyle à 8% en volume, à 60-70°C pendant 60 minutes, puis un lavage au propanol et un séchage à 80°C. La réaction avec l'iodure de méthyle est schématisée en (VIII) dans l'annexe II.

A la place de l'iodure de méthyle, on peut utiliser des chlorures ou bromures d'alkyle ayant de 1 à 10 atomes de carbone, ou bien des chlorures ou bromures de benzyle.

Après cette alkylation, la fibre optique est séchée à l'air pendant quelques minutes puis laissée à l'étuve pendant une nuit à 90°C, elle est alors prête pour l'imprégnation par le réactif chimique qui peut être faite plusieurs jours après.

### Etape g) : Immobilisation du réactif chimique.

La dernière étape du procédé consiste à immobiliser le réactif chimique dans le polymère greffé et réticulé.

L'immobilisation met en particulir à profit la présence d'une charge positive sur le motif imidazole pour fixer des réactifs chimiques comportant une fonction électro-négative, et en particulier, une fonction acide sulfonique (̵SO₃H).

Lorsque le réactif chimique est un indicateur coloré destiné en particulier pour la mesure du pH d'un liquide ou pour la mesure de la pression de CO₂ dans un liquide, on utilise une sulfone phtaléïne telle que le rouge de chlorophénol, le rouge de bromophénol, le bleu de bromophénol, le vert de bromocrésol, le bleu de bromothymol, la 3,4,6,8-tétrabromophénolsulfone phtaléïne et leurs mélanges. Ces indicateurs colorés ont l'avantage d'avoir un pka entre 3 et 9.

De préférence, on utilise la tétrabromophénolsulfone phtaléïne du fait que son spectre d'absorption se situe au centre du domaine visible (592 nm) et que son pka est voisin de 7.

La méthode d'immobilisation du réactif chimique sur le polymère est relativement simple.

### EXEMPLE

L'immobilisation se fait par contact avec une solution méthanolique de colorant(s) 0,1% (en poids). L'extrémité active du capteur y est plongée entre 30 secondes et 60 minutes dans un bécher contenant la solution de colorant dans un binaire méthanol-eau 80/20 sous agitation. Le capteur est ensuite rincé à l'eau pendant quelques minutes. Il est prêt à être utilisé. Le méthanol peut être remplacé par l'éthanol.

La durée d'imprégnation est déterminée par les grandeurs désirées du capteur (valeur d'absorption maximum, vitesse de réaction) et le type d'indicateur coloré utilisé.

Pour un fonctionnement en fluorescence, on remplace le ou les colorant(s) par un fluorophore tel que les sels de la fluoréscéïne, la rhodamine, etc.

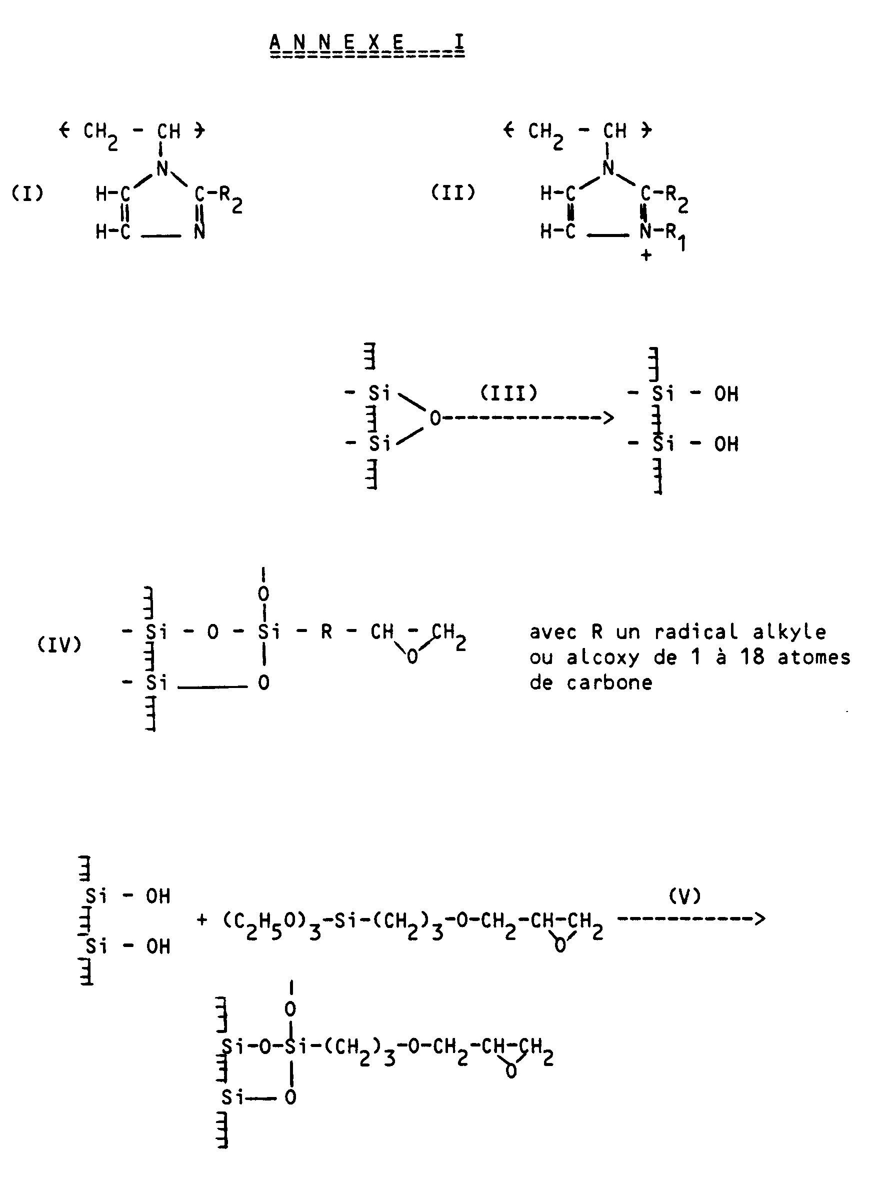

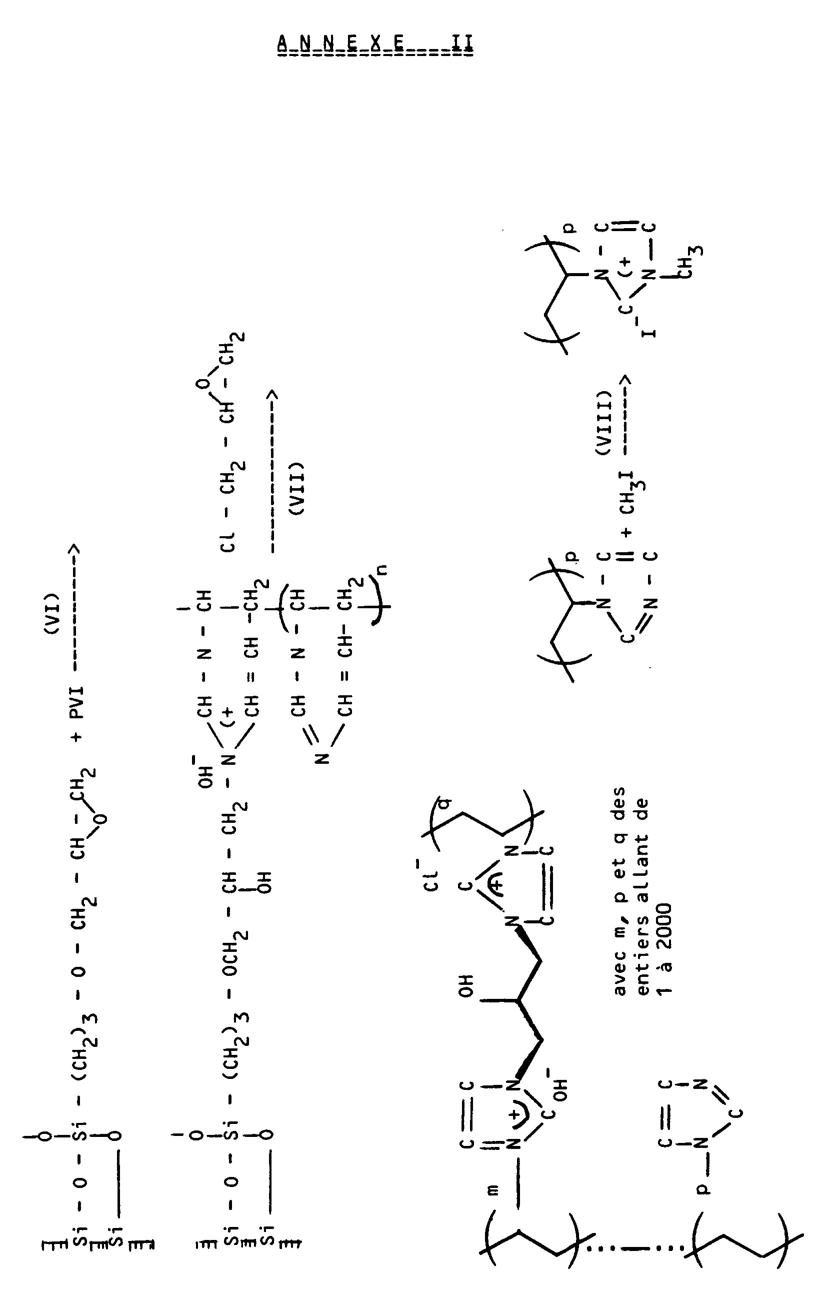

## Revendications

1. Capteur chimique actif à fibre optique pour la mesure d'une grandeur donnée d'un fluide, comportant un réactif chimique approprié à la mesure et apte à réagir avec le fluide, un moyen de support (20a, 28) du réactif et une unique fibre optique (20) destinée à envoyer de la lumière sur le réactif et à récupérer la lumière renvoyée par le réactif, le capteur étant caractérisé en ce que le moyen de support comporte un film (28) de polymère ou de copolymère du vinylimidazole dans lequel est immobilisé le réactif.

2. Capteur selon la revendication 1, caractérisé en ce que l'une des extrémités (20a) de la fibre optique (20) constitue une partie du moyen de support.

3. Capteur selon la revendication 1 ou 2, caractérisé en ce que le polymère renfermant le réactif est greffé directement sur l'une des extrémités (20a) de la fibre optique (20).

4. Capteur selon l'une quelconque des revendications 1 à 3, caractérisé en ce que la fibre optique comporte un coeur (22) en silice.

5. Capteur selon l'une quelconque des revendications 1 à 4, caractérisé en ce que le réactif est fixé essentiellement par liaisons ioniques sur le polymère.

6. Capteur selon l'une quelconque des revendications 1 à 5, caractérisé en ce que le réactif chimique est constitué d'un mélange de chromophores.

7. Capteur selon l'une quelconque des revendications 1 à 6, caractérisé en ce qu'une enveloppe de protection (26) est prévue pour protéger le polymère renfermant le réactif.

8. Capteur démontable selon l'une quelconque des revendications 1 à 6, caractérisé en ce que la fibre optique est pourvue, à l'extrémité (20b) opposée à celle en regard du réactif, d'un connecteur optique (30) destiné à être monté sur au moins une autre fibre optique (32, 34, 36).

9. Capteur selon l'une quelconque des revendications 1 à 8 pour la mesure du pH d'un liquide, caractérisé en ce que le réactif chimique contient au moins un chromophore comportant une fonction acide sulfonique.

10. Capteur selon l'une quelconque des revendications 1 à 9, caractérisé en ce que le réactif chimique est choisi parmi le rouge de chlorophénol, le rouge de bromophénol, le bleu de bromophénol, le vert de bromocrésol, le bleu de bromothymol, la 3,4,6,8-tétrabromophénolsulfone phtaléïne et leurs mélanges.

11. Procédé de fabrication d'un capteur chimique pour la mesure d'une grandeur donnée d'un fluide, comportant un film (28) de polymère ou de copolymère du vinylimidazole, greffé sur l'extrémité d'une fibre optique (20a) comportant des groupements silanol et renfermant un réactif chimique approprié à la mesure et apte à réagir avec le fluide, caractérisé en ce qu'il comprend les étapes suivantes :
a) - polymériser ou copolymériser le vinylimidazole,
b) - activer l'extrémité de la fibre (20a) pour dégager ses groupements silanol,
c) - faire réagir les groupements silanol activés avec un organosilane comportant une fonction apte à réagir avec le polymère ou copolymère de vinylimidazole,
d) - faire réagir ladite fonction afin de greffer le polymère ou copolymère sur la fibre optique,
e) - réticuler le polymère ou copolymère,
f) - alkyler ou benzyler les motifs imidazole non
"quaternisés", et
g) - immobiliser le réactif chimique dans le polymère ou copolymère.

12. Procédé selon la revendication 11, caractérisé en ce que la fonction de l'organosilane apte à réagir avec le vinylimidazole est la fonction époxyde.

13. Procédé selon la revendication 11 ou 12, caractérisé en ce que l'étape (e) de réticulation se fait en présence d'un composé chimique polyfonctionnel.

14. Procédé selon l'une quelconque des revendications 11 à 13, caractérisé en ce que l'étape (e), de réticulation se fait à l'aide de l'épichlorhydrine.

## Claims

1. Active chemical sensor with optical fibre for measuring a given quantity of a fluid, having a chemical reagent appropriate for the measurement and able to react with the fluid, a support means (20a, 28) for the reagent and a single optical fibre (20) for supplying light to the reagent and for recovering the light reflected by the reagent, the sensor being characterized in that the support means has a vinyl imidazole polymer or copolymer film (28) in which the reagent is immobilized.

2. Sensor according to claim 1, characterized in that one of the ends (20a) of the optical fibre (20) constitutes part of the support means.

3. Sensor according to claim 1 or 2, characterized in that the polymer containing the reagent is directly grafted onto one of the ends (20a) of the optical fibre (20).

4. Sensor according to any one of the claims 1 to 3, characterized in that the optical fibre has a silica core (22).

5. Sensor according to any one of the claims 1 to 4, characterized in that the reagent is essentially fixed by ionic bonds to the polymer.

6. Sensor according to any one of the claims 1 to 5, characterized in that the chemical reagent is constituted by a mixture of chromophores.

7. Sensor according to any one of the claims 1 to 6, characterized in that a protective envelope (26) is provided for protecting the polymer containing the reagent.

8. Dismantlable sensor according to any one of the claims 1 to 6, characterized in that the optical fibre is provided on the end (20b) opposite that facing the reagent with an optical connector (30) for mounting on at least one other optical fibre (32, 34, 36).

9. Sensor according to any one of the claims 1 to 8 for measuring the pH of a liquid, characterized in that the chemical reagent contains at least one chromophore having a sulphonic acid function.

10. Sensor according to any one of the claims 1 to 9, characterized in that the chemical reagent is chosen from among chlorophenol red, bromophenol red, bromophenol blue, bromocresol green, bromothymol blue, 3,4,6,8-tetrabromophenol sulphone phthalein and mixtures thereof.

11. Process for the production of a chemical sensor for measuring a given quantity of fluid having a vinyl imidazole polymer or copolymer film (28) grafted onto the end of an optical fibre (20a) having silanol groups and containing a chemical reagent suitable for the measurement and able to react with the fluid, characterized in that it comprises the following stages:
a) polymerizing or copolymerizing the vinyl imidazole,
b) activating the end of the fibre (20a) for releasing its silanol groups,
c) reacting the activated silanol groups with an organosilane having a function able to react with the vinyl imidazole polymer or copolymer,
d) reacting said function in order to graft the polymer or copolymer to the optical fibre,
e) crosslinking the polymer or copolymer,
f) alkylating or benzylating the non-quaternized imidazole units and
g) immobilizing the chemical reagent in the polymer or copolymer.

12. Process according to claim 11, characterized in that the function of the organosilane able to react with the vinyl imidazole is the epoxide function.

13. Process according to claim 11 or 12, characterized in that the crosslinking stage (e) takes place in the presence of a polyfunctional chemical compound.

14. Process according to any one of the claims 11 to 13, characterized in that the crosslinking stage (e) takes place with the aid of epichlorohydrin.

## Patentansprüche

1. Faseroptischer, aktiver, chemischer Sensor für die Messung einer gegebenen Größe eines Fluids, der ein chemisches Reagenz unfaßt, das zur Messung geeignet und fähig ist, mit den Fluid zu reagieren, ein Trägermittel (20a, 28) des Reagenzes und eine einzelne Lichtleitfaser (20), die dazu bestimmt ist, Licht auf das Reagenz zu senden und das von den Reagenz zurückgesendete Licht zurückzugewinnen, wobei der Sensor **dadurch gekennzeichnet**, ist, daß das Trägermittel einen Polymer- (28) oder Copolymerfilm aus Vinylimidazol umfaßt, in welchen das Reagenz gehalten wird.

2. Sensor gemäß Anspruch 1, dadurch gekennzeichnet, daß eines der Enden (20a) der Lichtleitfaser (20) einen Teil des Trägermittels bildet.

3. Sensor gemäß Anspruch 1 oder 2, dadurch gekennzeichnet, daß das Polymer, welches das Reagenz enthält, direkt auf einem der Enden (20a) der optischen Leitfaser (20) implantiert ist.

4. Sensor gemäß einen der Ansprüche 1 bis 3, dadurch gekennzeichnet, daß die optische Leitfaser einen Siliziumkern (22) umfaßt.

5. Sensor gemäß einen der Ansprüche 1 bis 4, dadurch gekennzeichnet, daß das Reagenz im wesentlichen durch Ionenverbindungen auf dem Polymer befestigt ist.

6. Sensor gemäß einen der Ansprüche 1 bis 5, dadurch gekennzeichnet, daß das chemische Reagenz aus einer Mischung von Chromophoren gebildet wird.

7. Sensor gemäß einen der Ansprüche 1 bis 6, dadurch gekennzeichnet ,daß eine Schutzhülle (26) vorgesehen ist, um das Polymer zu schützen, welches das Reagenz enthält.

8. Abnehmbarer Sensor gemäß einen der Ansprüche 1 bis 6, dadurch gekennzeichnet, daß die optische Leitfaser an dem Ende (20b) gegenüber dem des Reagenzmittels, mit einem optischen Verbindungsstück (30) versehen ist, das dazu bestimmt ist, an mindestens einer anderen optischen Leitfaser (32, 34, 36) angebracht zu werden.

9. Sensor gemäß einem der Ansprüche 1 bis 8 für die Messung des pH-Wertes einer Flüssigkeit, dadurch gekennzeichnet, daß das chemische Reagenz mindestens einen Chromophoren umfaßt, der eine Sulofosäurefunktion enthält.

10. Sensor gemäß einen der Ansprüche 1 bis 9, dadurch gekennzeichnet, daß das chemische Reagenz unter Chlorphenolrot, Bromphenolrot, Bromphenolblau, Bromcresolgrün, Bromthymolblau, 3,4,6,8-Tetrabromphenolsulfon-Phtalein und ihren Mischungen ausgewählt wird.

11. Herstellungsverfahren eines chemischen Sensors für die Messung einer gegebenen Größe eines Fluids, der einen Polymer- (28) oder Copolymerfilm aus Vinylimidazol umfaßt, der auf einem Ende einer optischen Leitfaser (20a) implantiert ist, welcher Silanolgruppen umfaßt und ein für die Messung geeignetes chemisches Reagenz einschließt, das fähig ist, mit den Fluid zu reagieren, ist dadurch gekennzeichnet, daß es die folgenden Anschnitte umfaßt:
a) - Vinylimidazol polymerisieren oder copolymerisieren,
b) - das Ende der Leitfaser (20a) aktivieren, um seine Silanolgruppen freizusetzen,
c) - die aktivierten Silanolgruppen mit einen Organosilan reagieren lassen, welches eine Funktion umfaßt, die fähig ist mit den Polymer oder Copolymer von Vinylimidazol zu reagieren,
d) - die besagte Funktion reagieren lassen, um das Polymer oder Copolymer auf der optischen Leitfaser zu implantieren,
e) - das Polymer oder Copolymer vernetzen,
f) - die nicht "quaterinisierten" Imidazoleinheiten alkylieren oder benzylieren, und
g) - das chemische Reagenz in den Polymer oder Copolymer festsetzen.

12. Verfahren gemäß Anspruch 11, dadurch gekennzeichnet, daß die Organosilan-Funktion, die fähig ist, mit Vinylimidazol zu reagieren, die Epoxidfunktion ist.

13. Verfahren gemäß Anspruch 11 oder 12, dadurch gekennzeichnet, daß der Anschnitt (e) der Vernetzung in Anwesenheit einer polyfunktionalen chemischen Verbindung erfolgt.

14. Verfahren gemäß einen der Ansprüche 11 bis 13, dadurch gekennzeichnet, daß der Anschnitt (e) der Vernetzung mit Epichlorhydrinsäure erfolgt.
